# EUROPÄISCHE PATENTSCHRIFT

(11) **EP 1 640 395 B1**
(45) Veröffentlichungstag und Bekanntmachung des Hinweises auf die Patenterteilung: **20.08.2008**
(21) Anmeldenummer: 05020054.2
(22) Anmeldetag: 15.09.2005
(51) Int. Cl.: C08G 18/80

(54) **Neues Verfahren zur Herstellung von 3,5-Dimethylpyrazol-blockierten Polyisocyanaten**
Novel process to prepare polyisocyanates blocked with 3,5-dimethylpyrazol
Nouveau procédé pour préparer de polyisocyanates masqués par 3,5-diméthylpyrazole

(30) Priorität: 24.09.2004 DE 102004046308
(43) Veröffentlichungstag der Anmeldung: 29.03.2006
(73) Patentinhaber: Bayer MaterialScience AG, 51368 Leverkusen (DE)
(72) Erfinder: Greszta-Franz, Dorota, Dr., 40699 Erkrath (DE); Thiebes, Christoph, Dr., 50670 Köln (DE); Ludewig, Michael, Dr., 51065 Köln (DE); Stimbert, Nina, 51381 Leverkusen (DE); Vicente, Amadeo, 08026 Barcelona (ES); Sanmarti, Eduard, 08026 Barcelona (ES); Peiron Samperiz, Fernando, EA Tarragona (ES)

(56) Entgegenhaltungen:
- EP-A- 0 713 871
- WO-A-03/000763

## Beschreibung

Die Erfindung betrifft ein Verfahren zur Herstellung von 3,5-Dimethylpyrazol (DMP) blockierten Polyisocyanaten, welche sich durch eine verbesserte Lagerstabilität auszeichnen.

Die Verwendung von DMP als Blockierungsmittel für Isocyanate ist bekannt (US-B 6 368 669 bzw. EP-B 0 159 117). Mit DMP blockierte Lackpolyisocyanate können als Vernetzer in hochwertigen Einkomponenten-Polyurethan-Lackbindemitteln verwendet werden. Der Vorteil von DMP gegenüber anderen Blockierungsmitteln wie beispielsweise Butanonoxim liegt in einer wesentlich niedrigeren Thermovergilbung der Lacke und einer vergleichsweise niedrigen Einbrenntemperatur von ca. 130°C.

Da DMP ein oberhalb 100°C schmelzender Feststoff ist und dies bei der großtechnischen Handhabung immer mit einem erhöhten Aufwand verbunden ist, wurde in EP-B 0 713 871 vorgeschlagen, die Blockierung der freien NCO-Gruppen eines Polyisocyanats mit einem *in situ* aus Acetylaceton und Hydrazin hergestellten DMP vorzunehmen. Im Falle einer reinen DMP-Blockierung werden die Eduktmengen bei der DMP-Herstellung so bemessen, dass pro Äquivalent an NCO-Gruppen des zu blockierenden Polyisocyanats 0,95 bis 1,05 mol DMP vorliegen. Neben einer reinen DMP-Blockierung wird auch die Mischblockierung mit anderen Verbindungen wie Butanonoxim, 1,2,4-Triazol, Diisopropylamin, Malonsäurediethylester oder Acetessigsäureethylester beschrieben. In ähnlicher Weise beschreibt auch WO-A-03000763 ein Verfahren zur Blockierung von Isocyanaten mit *in situ* hergestellten Pyrazolen, wie u.a. DMP.

Obwohl diese Verfahren zunächst hochwertige blockierte Isocyanate liefern, neigen diese Produkte jedoch bei der Lagerung im Vergleich zu entsprechenden Produkten, die mit festem statt mit in situ hergestelltem DMP synthetisiert wurden, zu einer schnelleren Gelbfärbung und zum Teil zu einer Viskositätszunahme.

Es wurde nun gefunden, dass, wenn die Blockierungsreaktion mit DMP zweistufig durchgeführt wird, wobei in der ersten Stufe ein in situ hergestelltes DMP und in der zweiten ein reines als Feststoff eingesetztes DMP verwendet wird, diese Alterungserscheinungen bei Lagerung der Produkte nicht auftreten.

Gegenstand der Erfindung ist daher ein zweistufiges Verfahren zur Blockierung organischer Polyisocyanate mit 3,5-Dimethylpyrazol (DMP), bei dem
A) 80 bis 99,5 mol-% der freien NCO-Gruppen einer Polyisocyanat-Komponente unter Verwendung einer organischen Lösung eines in situ aus Acetylaceton und Hydrazinhydrat hergestellten DMP umgesetzt werden und die verbleibenden freien Nco- Gruppen auschlieβend
B) mit festem 3,5-Dimethylpyrazol derart nachblockiert werden,
dass der Gehalt an freien NCO-Gruppen (berechnet als NCO; Molekulargewicht = 42) < 1 Gew.-% beträgt.

Bei den im erfindungsgemäßen Verfahren in der Polyisocyanat-Komponente eingesetzten Polyisocyanaten handelt es sich um beliebige, durch Phosgenierung oder nach phosgenfreien Verfahren, beispielsweise durch thermische Urethanspaltung, zugängliche Di- oder Triisocyanate des Molekulargewichtsbereichs 140 bis 1000 g/mol mit linear aliphatisch, cycloaliphatisch, araliphatisch und/oder aromatisch gebundenen Isocyanatgruppen. Beispiele solcher Isocyanate sind 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan (IMCI), Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 1,5-Diisocyanatonaphthalin.

Daneben können auch die sich von den genannten Isocyanaten abgeleiteten höhermolekularen NCO-funktionellen Verbindungen mit Isocyanurat-, Urethan-, Allophanat-, Biuret-, Iminooxadiazintrion-, Oxadiazintrion- und/oder Uretdiongruppen eingesetzt werden.

Selbstverständlich können auch beliebige Gemische solcher vorstehend genannter NCO-funktioneller Verbindungen eingesetzt werden.

Zur Einstellung besonderer Eigenschaften, beispielsweise der Funktionalität, können gegebenenfalls auch Monoisocyanate mitverwendet werden. Geeignete Monoisocyanate sind z. B. Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexyiisocyanat oder beliebige Gemische solcher Monoisocyanate. Bei Mitverwendung von Monoisocyanaten kommen diese allerdings maximal in solchen Mengen zum Einsatz, dass die mittlere Isocyanat-Funktionalität mindestens 1,8, bevorzugt 2,0 bis 6,0, beträgt.

Bevorzugt werden im erfindungsgemäßen Verfahren die höhermolekularen Verbindungen mit Isocyanurat-, Urethan-, Allophanat-, Biuret-, Iminooxadiazintrion-, Oxadiazintrion- und/oder Uretdiongruppen auf Basis aliphatischer und/oder cycloaliphatischer Diisocyanate eingesetzt.

Besonders bevorzugt werden Polyisocyanate bzw. Polyisocyanatgemische der vorstehend genannten Art mit Isocyanuratstruktur, Iminooxadiazindion- und/oder Biuretstruktur auf Basis von HDI, IPDI und/oder 4,4'-Diisocyanatodicyclohexylmethan eingesetzt. Ganz besonders bevorzugt werden Polyisocyanate mit Isocyanuratstruktur auf Basis von HDI eingesetzt.

Das in Schritt A) eingesetzte in situ hergestellte DMP wird durch Vorreaktion von Acetylaceton (Pentan-1,3-dion) mit Hydrazin, welches bevorzugt als Hydrazinmonohydrat eingesetzt wird, in einem für PUR-Lacke geeigneten Lösungsmittel im Sinne einer Kondensationsreaktion umgesetzt.

Geeignete Lösemittel hierfür sind die an sich üblichen, gegenüber Isocyanatgruppen inerten Lacklösemittel, wie Butylacetat, 1-Methoxypropyl-2-acetat, 3-Methoxy-n-butylacetat, 4-Methyl-2-pentanon, Cyclohexanon, Toluol, Xylol, N-Methylpyrrolidon, Chlorbenzol oder Testbenzin. Aber auch Mischungen, die vor allem höher substituierte Aromaten enthalten, wie sie unter den Bezeichnungen Solventnaphtha 100/150/200, Solvesso^{®} (Exxon Chemicals, Houston, TX, USA) oder Cypar^{®}, Cyclo Sol^{®}, Tolu Sol^{®}, Shellsol^{®} (Shell Chemicals, Eschborn, DE) im Handel sind, sind ebenfalls geeignet. Des weiteren können auch wassermischbare, aprotische, kurzkettige Glykolether, wie Diethylenglykoldimethylether, Diethylenglykoldibutylether. Triethylenglykoldimethylether, Tetraethylenglykoldimethylether, Dipropylenglykoldimethylether (z.B. Proglyde DMM^{®}, Dow Chemical Company, Midland, MI, USA), Polyethyleneglykoldibutylether (Polyglycol BB 300^{®}, Clariant, Muttenz, CH), Polyethyleneglykoldimethylether (Polyglycol DME 200, Clariant, Muttenz, CH) verwendet werden.

Die Mengen der eingesetzten Reaktionspartner Acetylaceton und Hydrazin werden so gewählt, dass pro 1 mol an unblockierten Isocyanatgruppen 0,8 bis 0,995 mol, vorzugsweise 0,9 bis 0,99 mol des in dem ersten Schritt des erfindungsgemäßen Verfahrens in situ gebildeten DMP zur Verfügung stehen.

Das Molverhältnis von Acetylaceton zu Hydrazinhydrat beträgt dabei typischerweise 1,1 : 1 bis 1 : 1,2, bevorzugt 1,0 : 1,0.

Die Reaktionstemperatur liegt typischerweise bei 50 bis 150°C, bevorzugt 70 bis 110°C.

Das Ende der Reaktion ist erreicht, wenn kein Reaktionswasser mehr gebildet wird.

Das Reaktionswasser wird typischerweise während der Reaktion über geeignete Verfahren aus dem Reaktionsgemisch entfernt. Geeignet hierfür sind die Phasentrennung im Falle wasserunlöslicher Lösungsmittel oder mittels Destillation, bevorzugt azeotroper Destillation, wobei im Falle eines Lösungsmittels, das mit Wasser kein Azeotrop bildet, ein an sich bekanntes Schleppmittel, beispielsweise Benzol, Toluol, Xylol oder ähnliche zugesetzt wird.

Nach Abtrennung des abgeschiedenen Wassers wird die vorliegende organische Lösung direkt in das erfindungsgemäße Verfahren eingesetzt.

Dabei wird entweder die wie vorstehend beschrieben hergestellte DMP-Lösung oder die Polyisocyanat-Komponente vorgelegt und mit der jeweils anderen Komponente versetzt.

Das Polyisocyanat kann dabei mit einem gegenüber NCO-Gruppen inerten Lacklösemittel der vorstehend genannten Art verdünnt werden.

Der Verlauf der Reaktion kann an der Abnahme des NCO-Gehalts mittels Titration [DIN EN ISO 11909] bzw. IR-spektroskopisch [NCO-Schwingung 2200 bis 2250 cm⁻¹] verfolgt werden. Sobald das *in situ* hergestellte DMP verbraucht ist, werden in Stufe B) pro Äquivalent der verbliebenen freien NCO-Gruppen 0,95 bis 1,05 mol, bevorzugt 0,98 bis 1,01 mol festes DMP hinzudosiert.

Als festes DMP wird typischerweise kommerziell erhältliches DMP in kristalliner oder amorpher Form eingesetzt. Die Reinheit beträgt >95 %, bevorzugt >99 %.

Die Temperaturen während der Blockierungsschritte A) und B) betragen im Allgemeinen 20 bis 110°C, vorzugsweise 50 bis 90°C.

Bevorzugt werden in Schritt A) 90 bis 99 % der freien NCO-Gruppen mit der in situ hergestellten DMP-Lösung blockiert.

Bevorzugt beträgt der Gehalt an freien NCO-Gruppen nach Stufe B) < 0,2 Gew.-%, bezogen auf das blockierte Polyisocyanat.

Die nach dem erfindungsgemäßen Verfahren hergestellten blockierten Polyisocyanate stellen wertvolle Ausgangsmaterialien zur Herstellung von Einkomponenten-Polyurethan-Lacken für die unterschiedlichsten hitzeresistenten Substrate, wie beispielsweise solche aus Metallen, Glas, Holz oder temperaturbeständigen Kunststoffen, dar. Besonders bevorzugte Reaktionspartner für die erfindungsgemäβen Verfahrensprodukte sind die an sich bekannten Hydroxylgruppen aufweisenden Polyacrylatharze.

### Beispiele:

Sofern nicht abweichen angegeben, beziehen sich alle Prozentangaben auf Gewichtsprozent. Bei den angegebenen Festkörpergehalten der Produkte handelt es sich um errechnete Werte, die dem Anteil der Komponenten entspricht, die nicht als Lösemittel eingesetzt werden.

Die Ermittlung des NCO-Gehaltes erfolgte durch Titration gemäß DIN EN ISO 11909.

Das Ende der Blockierungsreaktion wurde durch IR-spektroskopische Messungen auf einem Arid-Zone^{®} Spektrometer der Firma Bomen, Quebec, Kanada detektiert (NCO-Schwingung 2200 bis 2250 cm⁻¹).
Die Ermittlung der Viskosität erfolgte gemäß DIN EN ISO 3219
Die Ermittlung der Farbzahl nach Hazen erfolgte gemäß DIN EN 1557
Desmodur^{®} N 3300:
ein isocyanuratgruppenhaltiges Polyisocyanat auf Basis von 1,6-Diisocyanatohexan, NCO-Gehalt 21,5 %, Bayer MaterialScience AG, Leverkusen, DE
SN 100
Solventnaphtha 100, wie z. B. Solvesso^{®} (Exxon Chemicals, Houston, TX, USA)

### Beispiel 1 (Vergleich)

In einer Rührapparatur mit Wasserabscheider, Rückflusskühler und Tropftrichter wurden 210,0g Acetylaceton in 134,9 g SN 100 und 63,5 g 2-Methoxypropylacetat vorgelegt und auf 70°C erwärmt. Anschließend wurden 105,0 g Hydrazinhydrat zugetropft, wobei sich die Temperatur der Reaktionsmischung auf 90 bis 100°C erwärmte. Nach beendeter Zugabe wurde die Reaktionsmischung erhitzt (Sumpftemperatur 140°C) und solange am Wasserabscheider refluxiert bis sie die theoretisch zu erwartende Menge an Wasser (75,6 g Kondensationswasser + 37,8 g Hydratwasser aus dem Hydrazinhydrat = 113,4 g) abgeschieden hatte. Dann wurde die Reaktionsmischung auf 70°C abgekühlt.

In einer Rührapparatur mit Rückflusskühler und beheizbarem Tropftrichter wurden 393,7 g Desmodur^{®} N3300 bei 70°C vorgelegt und unter Rühren portionenweise mit der zuvor hergestellten DMP-Reaktionslösung versetzt. Nach beendeter Zugabe wurde bei 100°C noch für 1 Stunde nachgerührt. IR-spektroskopisch waren dann keine freien NCO-Gruppen mehr nachweisbar. Die fast farblose Lösung hatte die folgenden Daten:

| | |
|---|---|
| Feststoffgehalt: | 75 % |
| Gehalt an blockierten NCO-Gruppen (gerechnet als NCO): | 10,8 % |
| Farbzahl: | 71 APHA |
| Viskosität bei 23°C: | 4320 mPa·s |
| Ausbeute: | 100 %, bezogen auf eingesetztes Polyisocyanat. |

### Beispiel 2 (Vergleich)

In einer Rührapparatur mit Wasserabscheider, Rückflusskühler und Tropftrichter wurden 210,0g Acetylaceton in 134,9 g SN 100 und 63,5 g 2-Methoxypropylacetat vorgelegt und auf 70°C erwärmt. Anschließend wurden 105,0 g Hydrazinhydrat zugetropft, wobei sich die Temperatur der Reaktionsmischung auf 90 bis 100°C erwärmte. Nach beendeter Zugabe wurde die Reaktionsmischung erhitzt (Sumpftemperatur 140°C) und solange am Wasserabscheider refluxiert bis sie die theoretisch zu erwartende Menge an Wasser (75,6 g Kondensationswasser + 37,8 g Hydratwasser aus dem Hydrazinhydrat = 113,4 g) abgeschieden hatte. Dann wurde die Reaktionsmischung auf 70°C abgekühlt.

In einer Rührapparatur mit Rückflusskühler und beheizbarem Tropftrichter wurden 475,7 g Desmodur^{®} N3300 bei 70°C vorgelegt und unter Rühren portionenweise mit der zuvor hergestellten DMP-Reaktionslösung versetzt. Nach beendeter Zugabe wurde bei 100°C noch für 1 Stunde nachgerührt. Die fast farblose Lösung hatte die folgenden Daten:

| | |
|---|---|
| Feststoffgehalt: | 77 % |
| Gehalt an blockierten NCO-Gruppen (gerechnet als NCO): | 10,1 % |
| Gehalt an freien NCO-Gruppen (gerechnet als NCO): | 1,4 % |
| Farbzahl: | 76 APHA |
| Viskosität bei 23°C: | 11000 mPa·s |
| Ausbeute: | 100 %, bezogen auf eingesetztes Polyisocyanat. |

### Beispiel 3 (Vergleich)

In einer Rührapparatur mit Wasserabscheider, Rückflusskühler und Tropftrichter wurden 210,0g Acetylaceton in 142,5 g SN 100 und 76,1 g 2-Methoxypropylacetat vorgelegt und auf 70°C erwärmt. Anschließend wurden 105,0 g Hydrazinhydrat zugetropft, wobei sich die Temperatur der Reaktionsmischung auf 90 bis 100°C erwärmte. Nach beendeter Zugabe wurde die Reaktionsmischung erhitzt (Sumpftemperatur 140°C) und solange am Wasserabscheider refluxiert bis sie die theoretisch zu erwartende Menge an Wasser (75,6 g Kondensationswasser + 37,8 g Hydratwasser aus dem Hydrazinhydrat = 113,4 g) abgeschieden hatte. Dann wurde die Reaktionsmischung auf 70°C abgekühlt.

In einer Rührapparatur mit Rückflusskühler und beheizbarem Tropftrichter wurden 443,9 g Desmodur^{®} N3300 bei 50°C vorgelegt und dazu wurden in einer Portion unter Rühren 19,2 g festes DMP zugegeben. Unmittelbar nach der Zugabe des festen DMP wurde die Reaktionslösung unter Rühren portionenweise mit der zuvor hergestellten DMP-Reaktionslösung versetzt. Nach beendeter Zugabe wurde bei 100°C noch für 1 Stunde nachgerührt. IR-spektroskopisch waren dann keine freien NCO-Gruppen mehr nachweisbar. Die fast farblose Lösung hatte die folgenden Daten:

| | |
|---|---|
| Feststoffgehalt: | 76 % |
| Gehalt an blockierten NCO-Gruppen (gerechnet als NCO): | 11,1 % |
| Farbzahl: | 50 APHA |
| Viskosität bei 23°C: | 8300 mPa·s |
| Ausbeute: | 100 %, bezogen auf eingesetztes Polyisocyanat. |

### Beispiel 4 (erfindungsgemäß)

In einer Rührapparatur mit Wasserabscheider, Rückflusskühler und Tropftrichter wurden 210,0g Acetylaceton in 149,4 g SN 100 und 70,3 g 2-Methoxypropylacetat vorgelegt und auf 70°C erwärmt. Anschließend wurden 105,0 g Hydrazinhydrat zugetropft, wobei sich die Temperatur der Reaktionsmischung auf 90 bis 100°C erwärmte. Nach beendeter Zugabe wurde die Reaktionsmischung erhitzt (Sumpftemperatur 140°C) und solange am Wasserabscheider refluxiert bis sie die theoretisch zu erwartende Menge an Wasser (75,6 g Kondensationswasser + 37,8 g Hydratwasser aus dem Hydrazinhydrat = 113,4 g) abgeschieden hatte. Dann wurde die Reaktionsmischung auf 70°C abgekühlt.

In einer Rührapparatur mit Rückflusskühler und beheizbarem Tropftrichter wurden 443,9 g Desmodur^{®} N3300 bei 70°C vorgelegt und unter Rühren portionenweise mit der zuvor hergestellten DMP-Reaktionslösung versetzt. Nach beendeter Zugabe wurde für 1 Stunde bei 80°C nachgerührt, wobei der NCO-Gehalt auf 0,7 % absank. Anschließend wurden 13,6 g festes DMP zugegeben und noch für 2 Stunden bei 80°C nachgerührt. Die fast farblose Lösung hatte die folgenden Daten:

| | |
|---|---|
| Feststoffgehalt: | 75 % |
| Gehalt an blockierten NCO-Gruppen (gerechnet als NCO): | 10,9 % |
| Gehalt an freien NCO-Gruppen (gerechnet als NCO): | 0,03 % |
| Farbzahl: | 17 APHA |
| Viskosität bei 23°C: | 5160 mPa·s |
| Ausbeute: | 100 %, bezogen auf eingesetztes Polyisocyanat. |

### Beispiel 5 (erfindungsgemäß)

In einer Rührapparatur mit Wasserabscheider, Rückflusskühler und Tropftrichter wurden 210,0g Acetylaceton in 142,5 g SN 100 und 67,1 g 2-Methoxypropylacetat vorgelegt und auf 70°C erwärmt. Anschließend wurden 105,0 g Hydrazinhydrat zugetropft, wobei sich die Temperatur der Reaktionsmischung auf 90 bis 100°C erwärmte. Nach beendeter Zugabe wurde die Reaktionsmischung erhitzt (Sumpftemperatur 140°C) und solange am Wasserabscheider refluxiert bis sie die theoretisch zu erwartende Menge an Wasser (75,6 g Kondensationswasser + 37,8 g Hydratwasser aus dem Hydrazinhydrat = 113,4 g) abgeschieden hatte. Dann wurde die Reaktionsmischung auf 70°C abgekühlt.

In einer Rührapparatur mit Rückflusskühler und beheizbarem Tropftrichter wurden 443,9 g Desmodur^{®} N3300 bei 70°C vorgelegt und unter Rühren portionenweise mit der zuvor hergestellten DMP-Reaktionslösung versetzt. Nach beendeter Zugabe wurde für 1 Stunde bei 80°C nachgerührt, wobei der NCO-Gehalt auf 0,7 % absank. Anschließend wurden 19,2 g festes DMP zugegeben und noch für 2 Stunden bei 80°C nachgerührt. IR-spektroskopisch waren dann keine freien NCO-Gruppen mehr nachweisbar. Die fast farblose Lösung hatte die folgenden Daten:

| | |
|---|---|
| Feststoffgehalt: | 76 % |
| Gehalt an blockierten NCO-Gruppen (gerechnet als NCO): | 11,1 % |
| Farbzahl: | 33 APHA |
| Viskosität bei 23°C: | 8200 mPa·s |
| Ausbeute: | 100 %, bezogen auf eingesetztes Polyisocyanat. |

### Beispiel 6 (erfindungsgemäß)

In einer Rührapparatur mit Wasserabscheider, Rückflusskühler und Tropftrichter wurden 218,6g Acetylaceton in 152,4 g SN 100 und 71,8 g 2-Methoxypropylacetat vorgelegt und auf 70°C erwärmt. Anschließend wurden 109,3 g Hydrazinhydrat zugetropft, wobei sich die Temperatur der Reaktionsmischung auf 90 bis 100°C erwärmte. Nach beendeter Zugabe wurde die Reaktionsmischung erhitzt (Sumpftemperatur 140°C) und solange am Wasserabscheider refluxiert bis sie die theoretisch zu erwartende Menge an Wasser (78,8 g Kondensationswasser + 39,3 g Hydratwasser aus dem Hydrazinhydrat = 118,1 g) abgeschieden hatte. Dann wurde die Reaktionsmischung auf 70°C abgekühlt.

In einer Rührapparatur mit Rückflusskühler und beheizbarem Tropftrichter wurden 443,9 g Desmodur^{®} N3300 bei 70°C vorgelegt und unter Rühren portionenweise mit der zuvor hergestellten DMP-Reaktionslösung versetzt. Nach beendeter Zugabe wurde für 1 Stunde bei 80°C nachgerührt, wobei der NCO-Gehalt auf 0,5 % absank. Anschließend wurden 10,9 g festes DMP zugegeben und noch für 2 Stunden bei 90°C nachgerührt. IR-spektroskopisch waren dann keine freien NCO-Gruppen mehr nachweisbar Die fast farblose Lösung hatte die folgenden Daten:

| | |
|---|---|
| Feststoffgehalt: | 75 % |
| Gehalt an blockierten NCO-Gruppen (gerechnet als NCO): | 10,9 % |
| Farbzahl: | 34 APHA |
| Viskosität bei 23°C: | 5800 mPa·s |
| Ausbeute: | 100 %, bezogen auf eingesetztes Polyisocyanat. |

### Anwendungstechnische Untersuchungen:

Die Produkte aus den Beispielen 1 bis 6 wurden auf ihre Lagerstabilität bei Raumtemperatur (23°) und bei 50°C (Trockenschrank) untersucht. Die Ergebnisse sind in der nachfolgenden Tabelle zusammengefasst.

| | Beispiel 1 (Vergleich) | | Beispiel 2 (Vergleich) | | Beispiel 3 (Vergleich) | |
|---|---|---|---|---|---|---|
| | sofort | nach 2 Monaten | sofort | nach 2 Monaten | sofort | nach 2 Monaten |
| % NCO (frei) | 0 | | 1,4 | | 0 | |
| Viskosität, 23°C, mPas | 4320 | 4400 | 11000 | verfestigt n. 4 Tagen | 8300 | 11200 |
| Farbzahl, 23°C, APHA | 71 | 315 | 76 | - | 50 | 102 |
| Farbzahl, 50°C, APHA | - | 266 | - | 121 | - | 138 |

| | Beispiel 4 erfindungsgemäß | | Beispiel 5 erfindungsgemäß | | Beispiel 6 erfindungsgemäß | |
|---|---|---|---|---|---|---|
| | sofort | nach 2 Monaten | sofort | nach 2 Monaten | sofort | nach 2 Monaten |
| % NCO (frei) | 0,08 | | 0 | | 0 | |
| Viskosität, 23 °C, mPas | 5160 | 5600 | 8200 | 8500 | 5800 | 6000 |
| Farbzahl, 23°C, APHA | 17 | 27 | 33 | 46 | 34 | 37 |
| Farbzahl, 50°C, APHA | - | 29 | - | 57 | - | 47 |

Die aufgeführten Werte belegen, dass die blockierten Polyisocyanate der erfindungsgemäßen Beispiele 4 bis 6 deutlich farb- und viskositätsstabiler sind als die der Vergleichsbeispiele, welche in Anlehnung an EP-B 0 713 871 durchgeführt wurden.

## Patentansprüche

1. Verfahren zur Blockierung organischer Polyisocyanate mit 3,5-Dimethylpyrazol (DMP), bei dem
A) 80 bis 99,5 mol-% der freien NCO-Gruppen einer Polyisocyanat-Komponente unter Verwendung einer organischen Lösung eines in situ aus Acetylaceton und Hydrazinhydrat hergestellten DMP umgesetzt werden und die verbleibenden freien NCO-Gruppen anschließend
B) mit festem 3,5-Dimethylpyrazol derart nachblockiert werden,
dass der Gehalt an freien NCO-Gruppen (berechnet als NCO; Molekulargewicht = 42) < 1 Gew.-% beträgt.

2. Verfahren zur Blockierung von Polyisocyanaten mit 3,5-Dimethylpyrazol (DMP) gemäß Anspruch 1, **dadurch gekennzeichnet, dass** in A) als Polyisocyanat-Komponente Polyisocyanate mit Isocyanurat-, Iminooxadiazindion- und/oder Biuretstruktur auf Basis von HDI, IPDI und/oder 4,4'-Diisocyanatodicyclohexylmethan eingesetzt werden.

3. Verfahren zur Blockierung von Polyisocyanaten mit 3,5-Dimethylpyrazol (DMP) gemäß Anspruch 1 oder 2, **dadurch gekennzeichnet, dass** das in B) eingesetzte DMP kristallin oder amorph ist und eine Reinheit von > 99 % aufweist.

4. Verfahren zur Blockierung von Polyisocyanaten mit 3,5-Dimethylpyrazol (DMP) gemäß einem der Ansprüche 1 bis 3, **dadurch gekennzeichnet, dass** in B) so viel festes DMP eingesetzt und die Reaktion solange durchgeführt wird, dass Gehalt an freien NCO-Gruppen < 0,2 Gew.-% ist.

5. DMP-blockierte Polyisocyanate erhältlich nach einem Verfahren gemäß einem der Ansprüche 1 bis 4.

6. Verwendung DMP-blockierter Polyisocyanate gemäß Anspruch 5 bei der Herstellung von Beschichtungen, Verklebungen und/oder Elastomeren.

7. Substrate beschichtet mit Beschichtungen erhältlich aus DMP-blockierten Polyisocyanaten gemäß Anspruch 5.

## Claims

1. Process for blocking organic polyisocyanates with 3,5-dimethylpyrazole (DMP), in which
A) 80 to 99.5 mol% of the free NCO groups of a polyisocyanate component are reacted using an organic solution of a DMP prepared in situ from acetylacetone and hydrazine hydrate, and the remaining free NCO groups subsequently
B) are afterblocked with solid 3,5-dimethylpyrazole in such a way
that the free NCO group content (calculated as NCO; molecular weight = 42) amounts to < 1% by weight.

2. Process for blocking polyisocyanates with 3,5-dimethylpyrazole (DMP) according to Claim 1, **characterized in that** in A) polyisocyanates with isocyanurate, iminooxadiazinedione and/or biuret structure based on HDI, IPDI and/or 4,4'-diisocyanatodicyclohexylmethane are used as polyisocyanate component.

3. Process for blocking polyisocyanates with 3,5-dimethylpyrazole (DMP) according to Claim 1 or 2, **characterized in that** the DMP used in B) is crystalline or amorphous and has a purity of > 99%.

4. Process for blocking polyisocyanates with 3,5-dimethylpyrazole (DMP) according to one of Claims 1 to 3, **characterized in that** in B) the amount of solid DMP used and the time for which the reaction is carried out are such that the free NCO group content is < 0.2% by weight.

5. DMP-blocked polyisocyanates obtainable by a process according to one of Claims 1 to 4.

6. Use of DMP-blocked polyisocyanates according to Claim 5 in the production of coatings, adhesive bonds and/or elastomers.

7. Substrates coated with coatings obtainable from DMP-blocked polyisocyanates according to Claim 5.

## Revendications

1. Procédé pour le blocage de polyisocyanates organiques avec du 3,5-diméthylpyrazole (DMP), dans lequel
A) de 80 à 99,5 % en mole des groupes NCO libres d'un constituant polyisocyanate réagissent en utilisant une solution organique d'un DMP préparé in situ à partir d'acétylacétone et d'hydrate d'hydrazine et les groupes NCO libres restants sont ensuite
B) bloqués avec du 3,5-diméthylpyrazole solide,
de telle sorte que la teneur en groupes NCO libres (calculée comme NCO ; poids moléculaire = 42) < 1 % en poids.

2. Procédé pour le blocage de polyisocyanates avec du 3,5-diméthylpyrazole (DMP) selon la revendication 1, **caractérisé en ce que** dans A) on utilise comme constituant polyisocyanate des polyisocyanates avec une structure isocyanurate, iminooxadiazindione et/ou biuret à base d'HDI, d'IPDI et/ou de 4,4'-diisocyanatodicyclohexylméthane.

3. Procédé pour le blocage de polyisocyanates avec du 3,5-diméthylpyrazole (DMP) selon la revendication 1 ou 2, **caractérisé en ce que** le DMP utilisé dans B) est cristallin ou amorphe et présente une pureté > 99 %.

4. Procédé pour le blocage de polyisocyanates avec du 3,5-diméthylpyrazole (DMP) selon l'une quelconque des revendications 1 à 3, **caractérisé en ce que** dans B) on utilise autant de DMP solide et on réalise la réaction jusqu'à ce que la teneur en groupes NCO libres < 0,2 % en poids.

5. Polyisocyanates DMP-bloqués obtenus selon un procédé selon l'une quelconque des revendications 1 à 4.

6. Utilisation de polyisocyanates DMP-bloqués selon la revendication 5 pour la préparation de revêtements, d'adhésifs et/ou d'élastomères.

7. Substrats revêtus de revêtements obtenus à partir de polyisocyanates DMP-bloqués selon la revendication 5.
